Europäisches Patentamt

European Patent Office

Office européen des brevets

(19)

(11) Publication number: **0 264 013**
**A2**

(12) **EUROPEAN PATENT APPLICATION**

(21) Application number: **87114122.2**

(22) Date of filing: **28.09.87**

(51) Int. Cl.⁴: **B23B 27/04**

(30) Priority: **13.10.86 IT 2198586**

(43) Date of publication of application:
**20.04.88 Bulletin 88/16**

(84) Designated Contracting States:
**DE FR NL**

(71) Applicant: **AZ - F.I.U.S S.p.A.**
**Via Europa Unita 6**
**I-24030 Valbrembo (Province of**
**Bergamo)(IT)**

(72) Inventor: **Locatelli, Pietro**
**Via G. Paglia 6**
**I-24036 Ponte San Pietro(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Device for locking tool bits on tool bit-holders.**

(57) Device for locking tool bits on the related tool bit-holders for turning and the like, consisting of a tool bit-holder (1) with its head frontally shaped so as to have a substantially ledge-like recessed step (3) for the positioning of the tool bit (8), of an eccentric bracket (5) rotatable on the upper plane of the head (2) and lockable thereon by means of a screw (7), and of a substantially quadrangular recess (9) adapted to accommodate, when the bracket (5) is locked, the eccentric part (5a) of said bracket (5) so as to prevent rotations of the latter with respect to the plane of the head (2), and of a tool bit (8) having a prismatic shape, which can be arranged on said ledge (3) and locked thereon by means of said eccentric bracket (5), the base of said ledge (3) and that of said tool bit being provided with means (3a, 3b, 8a, 8b) for their mutual stable positioning, while a transverse notch (9) is provided on the upper face of the tool bit (8) to accommodate and lock the eccentric element (5a) of said bracket (5).

Fig. 3

## DEVICE FOR LOCKING TOOL BITS ON TOOL BIT-HOLDERS

The present invention relates to a device for locking tool bits made of hard metal or super high speed steel on tool bit-holders used on machine tools for threading, grooving and cutting metallic parts and the like.

As is known, lathe tool bits are made of small steel bars supporting, at one end or at both ends, a cutting tip in hard metal such as Widia or the like, or in so-called super high speed steel; such tool bits are locked by means of different systems on the tool bit-holders which consist of a metal bar applicable to the mandrel or to the carriage of the lathe according to the type of turning to be performed; said bar is provided, at its free end, with a head which is shaped so as to stably accommodate the tool bit.

It is also known that tool bit-holders for both inner and outer turning of parts have different dimensions and therefore different tool bit seat sizes. Moreover, since the tool bits have a short operating life, their replacement is required rather frequently. This forces frequent operations of the devices for locking the tool bits on the tool bit-holder, it being also necessary that said devices be always capable of ensuring the stable locking of the tool bit with simple and rapid operations.

In order to obtain stability and speed in locking, various locking systems are currently in use which are not always fully satisfactory either because of their complicated construction or because of difficulty in positioning the tool bits or also because of the complexity of the operations required.

The aim of the present invention is therefore to provide a device for locking tool bits on tool bit-holders used for turning and the like, structured so as to ensure a precise positioning and a secure locking of the tool bits on the related tool bit-holders, even after a very high number of locking and unlocking operations, and so as to be adapted for tool bits positioned both for inner and for outer machining operations.

An object of the invention is to provide a locking device for the abovementioned applications which is structurally simple, can be used both for internal and external machining, is easy to operate, safely reliable and has a modest cost, and is most of all capable of ensuring a stable positioning of the tool bit especially when subject to stresses directed axially with respect thereto.

This aim and this object, as well as others which will become apparent from the following description, are achieved by a device for locking tool bits on the tool bit-holders for machining operations on machine tools, characterized in that it comprises: a tool bit-holder having a head frontally shaped so as to have a ledge for the positioning of said tool bit, an eccentric bracket rotatable on the upper plane of said head and lockable thereon by means of a screw, a substantially quadrangular recess adapted to accommodate, when said bracket is locked, an eccentric part of said bracket so as to prevent the rotation of said bracket with respect to said head, said tool bit having a substantially prismatic shape, and being arrangeable on said ledge and locked thereon by means of said eccentric bracket, the base of said ledge and that of said tool-bit being provided with means for their mutual stable positioning, a transverse notch being provided on the upper face of said tool bit-holder to contain and lock said eccentric part of said bracket.

More in particular, said step or ledge can be provided transversely with respect to the head of the tool bit-holder, so as to allow the locking of tool bits in the position adapted for the internal machining of parts; similarly, said ledge can be provided laterally with respect to the tool-bit holder head to allow the external machining of parts.

The invention is described hereinafter in greater detail in a preferred and non-exclusive embodiment, with reference to the accompanying drawings, given only by way of non-limitative example, wherein:

figure 1 is a perspective view of a device for locking tool bits on their tool bit-holder in locking position, provided according to the invention and usable for the machining of the interior of the part to be processed;

figure 2 is a view of a device similar to that of figure 1, but adapted for the external machining of the part to be processed:

figure 3 is an exploded perspective view of the same device of figure 2;

figures 4 to 8 are views, in partial cross section, of the individual component elements of the devices of figures 1 and 2.

Fig. 9 is a cross sectioned view along the line IX-IX of figure 1 of the tool bit.

With reference to the above described figures, the device, according to the invention, consists of a rod-like tool-holder or tool bit-holder 1, with conventional dimensions and of a conventional type, which, as is known, can be applied to the mandrel of a lathe for the internal and external machining of parts, or also to the carriage which is movable perpendicular and longitudinally with respect to the machine tool.

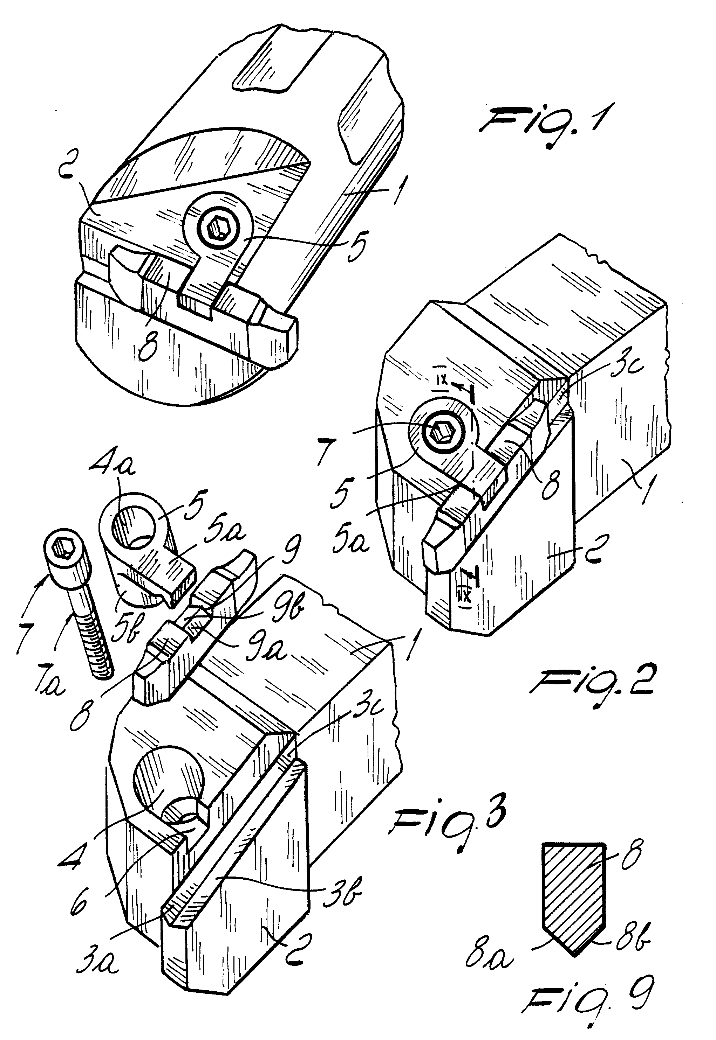

According to the invention, the head 2 of the tool bit-holder 1 (figures 2-3-4) is provided with a support ledge 3 formed laterally with respect to said head and parallel to the tool bit-holder 1. The base surface of the ledge 3 is substantially in the shape of a wide V, the two sides 3a and 3b whereof (figure 4) are planar for reasons which will be clarified hereinafter.

A through threaded hole 4 is provided on the upper face of the head 2 of the tool bit-holder 1 and its longitudinal axis is parallel to the edge 3c of the ledge 3. A substantially eccentric-shaped bracket 5 is positioned coaxially with respect to said threaded hole and is provided with a hole 4b.

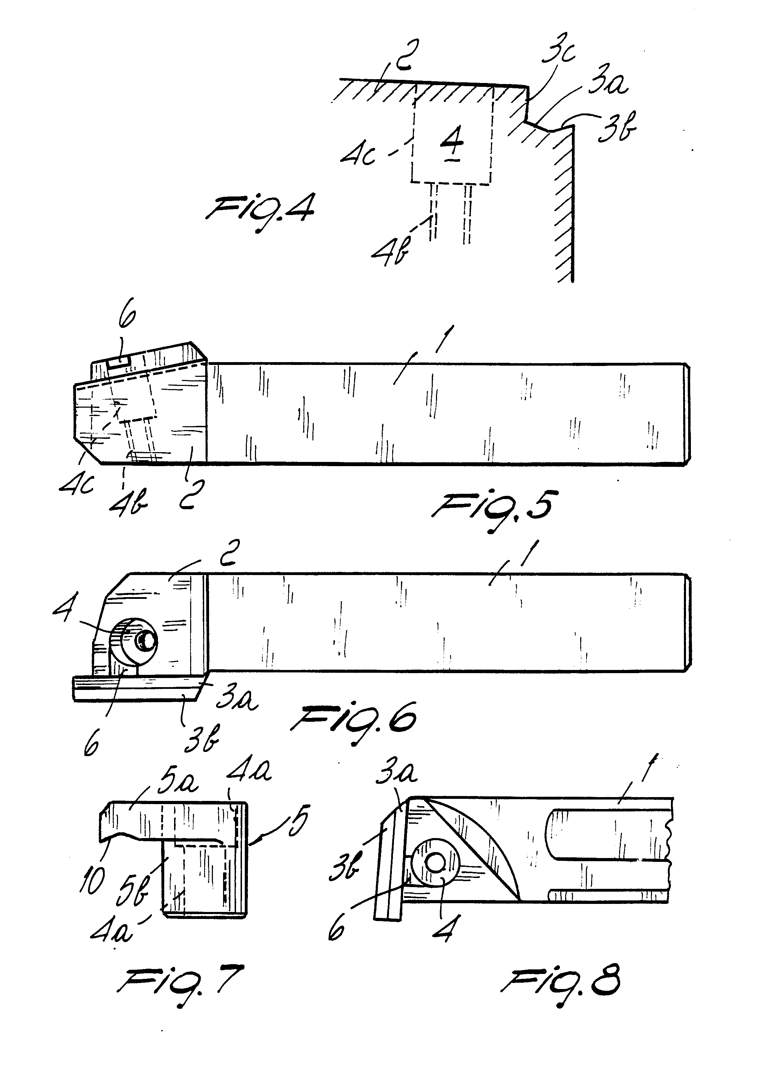

The eccentric part 5a of the bracket is adapted to accommodate itself in a recess 6 provided in said head perpendicular to the ledge 3. The eccentric part 5a of the bracket has such a transverse cross section as to be stably accommodated in the recess 6 when the bracket is locked on the head 2 by means of a screw 7. Figures 5 and 6 clearly illustrate the relative positions of the recess 6 and of the ledge 3 with a V-shaed base 3a-3b, while figure 7 illustrates only the bracket 5 which is in practice made of a cylindrical guide body 5b which is accommodatable within the first portion 4c, having a greater diameter than the hole 4; the body 5b is provided with a central threaded hole 4a for the head of the screw 7, the threaded part 7a whereof engages in the threaded hole 4b (figs. 4-5) provided in the lower part of the head 2.

A tool bit 8 is positioned on the ledge 3 and is of the type with a cutting tip at one or both ends. The tool bit 8 has a prismatic cross section, that is to say a longitudinally convex V-shaped bottom 8a, 8b so as to match the concave V-shaped bottom 3a, 3b of the ledge 3, while on the face opposite to the V-shaped bottom it is provided with a recess 9 having such a width and depth as to accommodate the end 5a of the bracket 5 when it is locked, said recess 9 having its bottom substantially in the shape of an inverted and widened V (figure 3). The inclined wings 9a-9b of the recess 9 form an angle with one another such as to allow said bottom to accommodate in a stable manner within a saddle 10 provided on the lower part of the terminal portion of the bracket (figure 7).

Figures 1 and 8 illustrate a device for locking tool bits on tool bit-holders for the internal machining of parts.

In said figures the component elements are the same ones described previously in the preceding figures, the only difference being that the V-shaped ledge is provided transversely with respect to the tool bit-holder 1 and frontally with respect to the head 2; in this case the recess 6 for the eccentric element of the bracket 5 is arranged at 90° with respect to the recess 6 of the preceding figures, while the securing and the locking of the tool bit are achieved in the same manner as in the preceding figures.

The device both for inner and outer machining, merely requires the tightening of the screw 7 to secure the tool bit.

In fact the screw 7 pushes downwards the bracket 5 which is guided into place both by the main hole 4 and by the transverse recess 6 of the head 2; thus, in practice, the bracket can move only vertically by acting on the screw 7.

The stable locking of the tool bit on the tool bit-holder is achieved when said tool bit, mounted on the V-shaped seat of the ledge 3, makes contact with the terminal portion of the bracket which is pushed downwards by the locking screw. Since the vertical side 3c of the ledge is formed so as to adhere precisely to the side of the tool bit, a secure lateral resting is achieved for said tool bit.

Moreover, the presence of the upturned V-shaped recess, provided on the upper face of the tool bit, allows the end of the bracket to insert itself into the recess in a stable manner, thus preventing the locked tool bit from performing any rearward movement with respect to the ledge.

In practice, due to the fact that the bracket cannot rotate since it is retained in the recess 6 of the head and the fact that the tool bit cannot move on the ledge since it is locked by the bracket which cannot rotate, a safe and stable locking of the tool bit is achieved, together with a great ease and speed in the replacement of said tool bit.

Naturally, in practice the invention as described above is susceptible to structurally equivalent modifications and variations, as well as being usable for locking other cutting tools, without thereby abandoning the scope of the protection of the invention.

**Claims**

1. Device for locking tool bits on related tool bit-holders for machining operations on machine tools, characterized in that it comprises: a tool bit-holder (1) having a head (2) frontally shaped so as to have a ledge (3) for the positioning of said tool bit (8), an eccentric bracket (5) rotatable on the upper plane of said head (2) and lockable thereon by means of a screw (7), a substantially quadrangular recess (6) adapted to accommodate, when said bracket (5) is locked, an eccentric part (5a) of said bracket (5) so as to prevent any rotation of said bracket (5) with respect to said head (2), said tool bit (8) having a substantially prismatic shape and being arrangeable on said ledge (3) and locked thereon by means of said eccentric bracket (5), the base of said ledge (3) and that of said tool bit (8) being provided with means (3a, 3b, 8a, 8b) for their mutual stable positioning, a transverse notch (9) being provided on the upper face of the said tool bit (8) to contain and lock said eccentric part (5a) of said bracket (5).

2. Device according to claim 1, characterized in that said means for the mutual stable positioning of said ledge (3) and of said tool bit (8) consist of a substantially V-shaped seat (3a, 3b) formed in the base of said ledge (3) and of a bottom (8a, 8b) of said tool bit (8) which is also V-shaped and has such dimensions as to be stably accommodatable within said V-shaped seat (3a, 3b) of said ledge (3).

3. Device according to claim 2, characterized in that said transverse recess (9) provided on the upper portion of said tool bit (8) is provided with an inverted V-shaped bottom (9a, 9b) adapted to engage, when said bracket (5) is locked, within a complementarily shaped seat (10) provided at the base of the end of said bracket (5).

4. Device according to one or more of the preceding claims, characterized in that said holder ledge (3) is provided laterally and axially with respect to said tool bit-holder (1) to allow the positioning of said tool bits (8) for the external machining of metallic parts.

5. Device according to one or more of the preceding claims, characterized in that said ledge (3) is provided transversely with respect to the axis of said tool bit-holder (1) to allow the internal machining of metallic parts.

Fig.1

Fig.2

Fig.3

Fig.9

0 264 013

Fig.4

Fig.5

Fig.6

Fig.7

Fig.8